# EUROPEAN PATENT APPLICATION

(11) **EP 3 862 739 A1**
(43) Date of publication of application: **11.08.2021**
(21) Application number: 21020064.8
(22) Date of filing: 10.02.2021
(51) Int. Cl.: G01M 13/02

(54) **WORKSHOP EQUIPMENT FOR CONTROLLING AND TESTING ROBOTIC GEARBOXES**

(30) Priority: 10.02.2020 IT 202000002608
(71) Applicant: System S.r.l., 52027 San Giovanni Valdarno (AR) (IT)
(72) Inventor: Pozzuoli, Marco, 52044 Cortona (AR) (IT)

(57) **Abstract**

An equipment for controlling and testing robotic gearboxes which comprise an electronic control unit (20) for controlling and interfacing with the vehicle systems, an electro-hydraulic unit (21) for moving gear selection actuators, equipped with power and sensing components and clutch control unit, and a gearbox (22) containing the necessary mechanisms and gears; the equipment (1) is characterized in that it comprises: a main command and control unit (2) and at least a remote unit (3), said main unit (2) and said remote unit (3) being connected to each other through a wiring (23), wherein the information processed by the central unit (2) is received through the remote unit (3), said remote unit (3) being provided with a plurality of connections (24) for said electrohydraulic unit (21), connections which are shaped and sized according to the devices to be monitored and the relative units of measurement to be detected.

## Description

The present invention concerns the technician field of motor vehicles, the so-called field of "automotive", and relates, in particular, to a workshop equipment for controlling and testing robotic gearboxes.

It is known that the robotic gearbox is a transmission in which the change from one gear to another, instead of being performed manually by the driver, takes place automatically. In practice, there is a control unit that takes care of operating the clutch and engaging the gears after selecting them. Two operating modes can be provided: the first is totally automatic and in this case the control unit decides autonomously when to change and which ratio to insert; the second is manual and, usually, sequential, and in this case is the driver who commands the passage to a lower or higher gear, using the classic central lever, or special levers placed behind the steering wheel. The control unit, after receiving an impulse (both automatic and from the driver), activates electric or hydraulic actuators that detach the clutch, switch from one gear to another and reconnect the clutch. Suitable devices are provided in order to facilitate the shifting by adjusting the engine speed, revving up or down as a function of the shifting to achieve.

From a structural point of view, a robotic gearbox consists of three main elements:
- an electronic control unit that controls and interfaces with the vehicle systems;
- an electro-hydraulic unit for moving the gear selection and clutch control actuators;
- a gearbox, which contains the mechanisms and the necessary gearing and which may be similar in type to those used for a change of "manual" type.

The electro-hydraulic unit contains the necessary power and detection components, among which the following can be listed:
- a pump oil;
- a pressure accumulator ;
- electro-valves for the control of actuators;
- hydraulic actuators ;
- detection sensor of physical quantities such as, for example, pressure, angular displacements and/or linear displacements.

The electronic control unit of the gearbox, in the state of normal operation, continuously detects the various information and, by appropriately controlling the hydraulic unit, ensures the operating status of the gearbox suitable for the operating status of the vehicle (gear selection and clutch engagement).

In the case in which also only one of the components of the hydraulic unit is defective, the electronic control unit is not able to ensure the perfect and safe operation of the entire system and, therefore, the same control unit emits a fault signal which determines a fault state of the gearbox so resulting in a limited use or even in a blockage of the shifting of any gear.

Although the electronic control units are provided with advanced diagnostic systems, it is not possible, through the exclusive use of generic diagnostic apparatuses, to establish the exact nature of the fault. This is because the electronic control unit does not allow all the operations necessary to define the present fault. A possible consequence of the failure diagnosis of the fault/s in the workshop can determine the replacement of the entire gearbox or of the electro-hydraulic unit and/or their entire revision at the constructor factory, so increasing considerably the costs of repair.

An aim of the present invention is to provide a workshop equipment that can be used for controlling and testing robotic gearboxes capable of overcoming the aforementioned drawbacks.

This result has been achieved in accordance with the invention by adopting the idea of making an equipment having the characteristics described in the independent claims. Other features are described in the dependent claims.

Among the advantages of the present invention, at least the following can be listed: the equipment allows to test in a practical and efficient manner the various hydraulic units and the detection sensors integrated therein; the equipment allows a quick diagnosis of the gearbox unit being repaired and a complete testing of the remanufactured unit; the equipment can be interfaced with the substantial totality of robotic gearboxes currently in production; the apparatus can comprise a central unit and a plurality of remote units or satellite units each provided with a plurality of connections shaped and sized according to the devices to be monitored and to the relative units of measurement to be detected, i.e. according to the different types of robotic gearbox to be checked/tested; the equipment is relatively simple to manufacture and with extremely low costs compared to the advantages provided and maintains its conditions substantially unchanged over time.

These and further advantages and characteristics of the present invention will be better understood by every person skilled in the art from the following description and with the help of the attached drawings, given as a practical example of the invention, but not to be considered in a limiting sense, in which:
- Fig. 1 is a block diagram that represents in a schematic way a possible example of embodiment of the equipment and of the connections between the apparatus and the components to be controlled;
- Fig. 2 is another schematic representation of the apparatus in which a unit under control and testing is marked with (10);
- Fig. 3 is a further schematic representation of the apparatus comprising a central unit and a plurality of remote units or satellite units each provided with a plurality of connections shaped and sized according to the devices to be monitored and the relative units of measurement to be detected, i.e. according to the different types of robotic gearbox to be checked/tested.

With reference to the attached drawings, a workshop equipment (1) made in accordance with the present invention can be used for the control and the testing of robotic gearboxes.

The equipment (1) consists of a main command and control unit (2) and of a remote unit (3) that are connected to each other via an appropriate electrical wiring (23).

As previously mentioned, the equipment (1) is used in workshops and the like and allows the functional testing of the electro-hydraulic group of robotic gearboxes that adopt this technology.

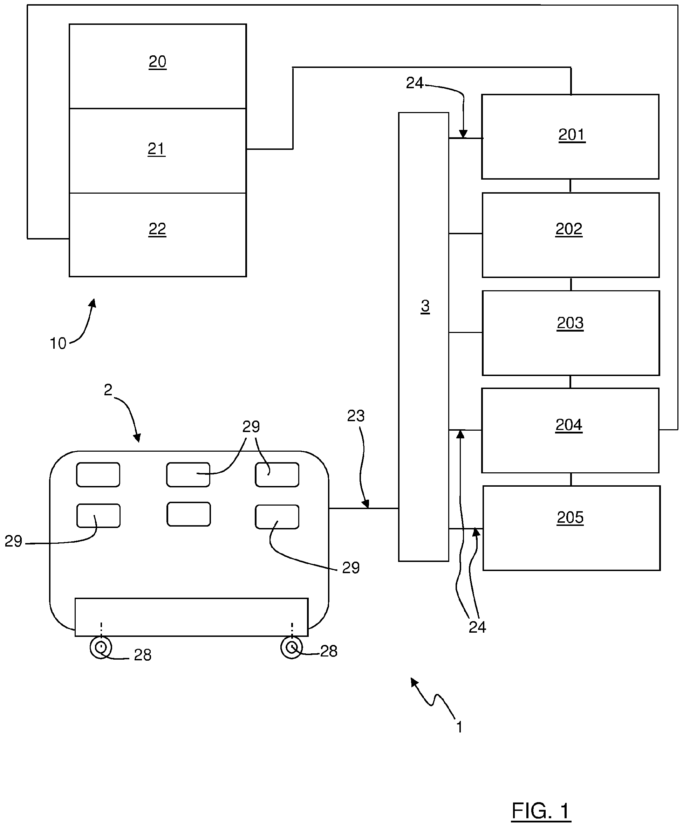

With reference to the non-limiting example of Fig. 1, a robotic gearbox (10) includes three main elements:
- an electronic control unit (20) for controlling and interfacing with the vehicle systems;
- an electro-hydraulic unit (21) for moving the gear selection and clutch control actuators; and
- a gearbox (22) containing the necessary mechanisms and gears.

The electronic control unit (20) conventionally has the function of controlling the gearbox and constitutes the connection between the gearbox and the corresponding devices provided on the vehicle. In practice, the signal deriving from the activation of the gear lever (or levers) determines the emission of a corresponding signal from the control unit (20) which acts on the electro-hydraulic unit (21).

The electro-hydraulic unit (21) contains the necessary power and detection components, which, in particular, may include:
- an oil pump (201);
- a pressure accumulator (202);
- control electro-valves (203) for the actuators;
- hydraulic actuators (204); and
- sensors for detecting physical quantities (205) such as pressure, angular displacements and / or linear displacements.

The gearbox (22) contains the trains of gears delegated to define the transmission ratio between the driving shaft and the final transmission on the basis of the connections that are made by activating the actuators (204); as previously mentioned, the gearbox (22) can be of a similar type to those used for manual gearboxes.

The main unit (2) comprises a box-like containment body which can be provided with wheels (28) and which contains all the detection and measurement circuits of the equipment (1). Screens may be provided on the main unit to display different gearbox functions or sections. For example, there may be sections for "engagement", "selection", "machine status and menu", "oil pump and hydraulic pressure", "clutch". In practice, through the screens (29) the operator is able to obtain information relating to the functionality of all sections of the gearbox. This information is provided by software programs capable of displaying the data detected and processed by the equipment (1) on the screens (29).

The information processed by the central unit (2) is received through the remote unit or secondary unit (3) which is provided with a plurality of connections (24) which are shaped and sized according to the devices to be monitored and the relative unit of measurement to be detected.

In practice, the remote unit (3) makes all the necessary connections with the electrohydraulic unit (21) locally available, offering a versatile and complementary connection with respect to the parts of the same electrohydraulic unit (21). In other words, the connections with the unit to be tested (electrohydraulic unit 21) are obtained with cables specially made in different ways, which have the function of connecting the various devices present on the unit such as the hydraulic oil pump (201), the pressure accumulator (202), the control electro-valves (203) for the actuators, the hydraulic actuators (204) and the measurement sensors (205).

The present solution allows to connect to the many types of connections present on the different types of hydraulic units.

The equipment (1) interfaces directly with the hydraulic unit, separated from the gearbox, allowing the specialized technician all the operations necessary to establish the origin of the malfunction.

In particular, through the particular connection defined by electrical wiring (23) - remote unit (3) - connections (24), the equipment (1) is equipped with means conformed to allow:
- to operate the hydraulic pump (201) detecting its absorption;
- to check the hydraulic pressure generated, for example by detecting the pressure value determined in the accumulator (202);
- to operate the electro valves (203), both individually and in groups;
- to check the electrical efficiency of the electro valves (203);
- to check the mechanical efficiency of the electro valves (203) by observing the movements obtained;
- to check the efficiency of the hydraulic actuators (204);
- to check the signals of the different sensors (205) (pressure or displacement);
- to perform repeated test cycles of the operation of the unit to identify any defects "under stress".

In practice, the solution offered by this equipment makes it possible to connect to the many types of connections present on the different types of hydraulic units.

In particular, by way of example, the remote or secondary unit (3) can allow the connection of up to eight proportional/ON-OFF electro valves and up to five position and/or pressure sensors and/or other physical quantities sensors and to a high absorption user.

All connections between the central unit (2) and the remote unit (3) are wired, i.e. obtained with an electric cable that transmits the detected signals and the verification signals of the components to be monitored.

The main control unit (2) generates the appropriate control signals for the electro valves depending on the type of hydraulic unit to be tested. These command signals reach the group (10) to be controlled by passing through the remote unit (3) which constitutes an interface between the main unit (2) and the group (10).

In those cases in which the sensor mounted on the unit (10) does not generate a signal that can be directly read by the main unit (2), the connection cable (24) between the remote unit (3) and the relative sensor arranged and acting on the unit (10) is provided with a signal conversion interface. This is possible because the remote unit (3) is equipped with a power source, thanks to the connection cable (23) with the main unit (2).

In this way the type of testable sensors is further expanded.

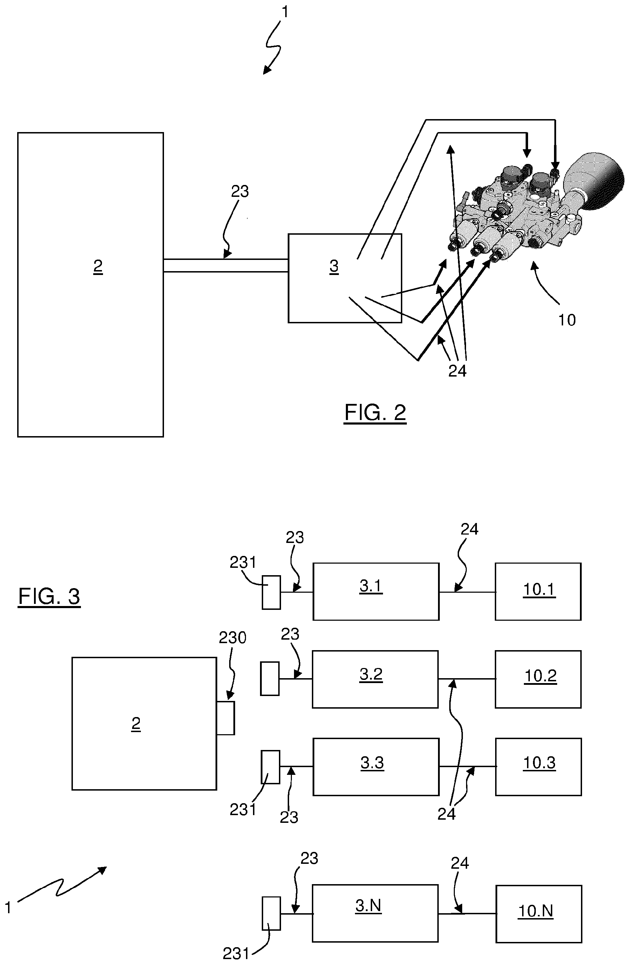

With reference to the diagram of Fig. 3, the equipment (1) comprises a central unit (2) and a plurality of remote units or satellites unit (3.1, 3.2, 3.3, ... 3.N) each provided with a plurality of connections shaped and sized according to the devices to be monitored and the relative units of measurement to be detected, i.e. according to the different types of robotic gearbox to be checked/tested, indicated with (10.1, 10.2, 10.3, ..., 10N).

In other words, the apparatus (1) comprises a remote unit (2) and a number of remote units (3) capable of allowing the control and testing of a corresponding plurality of different robotic gearboxes. Each of the remote units (3.1, 3.2, 3.3, 3N) therefore allows the control and testing of a specific type of robotic gearbox (10.1, 10.2, 10.3, 10.N).

Special configurations of the connections (24) can be provided in order to allow connection only for specific devices to be monitored and the relative units of measurement to be detected, to eliminate the possibility of error.

Similarly, also the connection (23) between the central unit (2) and the remote units (3) can comprise a pair of connectors (230, 231) which can be coupled together according to a unique positioning so as to allow the connection according to a single pre-established mode. The connectors (230, 231) are schematically represented by blocks; in reality, they can comprise alignment notches and/or shaped portions that can be uniquely coupled.

Furthermore, the details of execution may in any case vary in an equivalent manner in the shape, dimensions, arrangement of the elements, nature of the materials used, without however departing from the scope of the idea of the solution adopted or of the inventive concept and therefore remaining within the limits of the protection granted by the following claims.

## Claims

1. Workshop equipment for controlling and testing robotic gearboxes which comprise an electronic control unit (20) for controlling and interfacing with the vehicle systems, an electro-hydraulic unit (21) for moving gear selection actuators, equipped with power and sensing components and clutch control unit, and a gearbox (22) containing the necessary mechanisms and gears, equipment (1) **characterized in that** it comprises: a main command and control unit (2) and at least a remote unit (3), said main unit (2) and said remote unit (3) being connected to each other through a wiring (23), wherein the information processed by the central unit (2) is received through the remote unit (3), said unit remote (3) being provided with a plurality of connections (24) for said electrohydraulic unit (21), connections which are shaped and sized according to the devices to be monitored and the relative units of measurement to be detected.

2. Workshop equipment according to claim 1, **characterized in that** said remote unit (3) is provided with cables specially and differently made, which have the function of connecting the various devices present on or connected to said electrohydraulic unit (21), among that there are a hydraulic pump (201), a pressure accumulator (202), control electro valves (203) for actuators, hydraulic actuators (204) and sensors (205) for measuring quantities.

3. Workshop equipment according to claim 2, **characterized in that** the connection between the equipment (1) and the robotic gearbox (10) made through the remote unit (3) and the connections (24) is provided with means conformed in order to:
- operate the hydraulic pump (201) detecting its absorption and/or
- check the hydraulic pressure generated, for example by detecting the pressure value determined in the accumulator (202) and/or
- operate the electro valves (203), both individually and in groups and/or
- check the electrical efficiency of the electro valves (203) and/or
- check the mechanical efficiency of the electro valves (203) by observing the movements obtained and/or
- check the efficiency of the hydraulic actuators (204) and/or
- check the signals of the various sensors (205), relating to pressure or displacement, and/or
- perform repeated test cycles of operation of the unit to identify any defects "under stress".

4. Workshop equipment according to claim 2, **characterized in that** the connection between the equipment (1) and the robotic gearbox (10) made through the remote unit (3) and the connections (24) is provided with means conformed in order to:
- operate the hydraulic pump (201) detecting its absorption;
- check the hydraulic pressure generated, for example by detecting the pressure value determined in the accumulator (202);
- operate the electro valves (203), both individually and in groups;
- check the electrical efficiency of the electro valves (203);
- check the mechanical efficiency of the electro valves (203) by observing the movements obtained;
- check the efficiency of the hydraulic actuators (204);
- check the signals of the various sensors (205) (pressure or displacement):
- perform repeated test cycles of operation of the unit to identify any defects "under stress".

5. Workshop equipment according to one of the preceding claims, **characterized in that** said main unit (2) comprises a box-shaped body which contains the detection and measurement circuits of the equipment (1), screens being provided on said main unit for the display of different functions or sections of the gearbox.

6. Workshop equipment according to one of the preceding claims, **characterized in that** said main unit (2) is provided with means suitable for generating control signals for electro valves according to the type of hydraulic unit to be tested, said control signals reaching the group (10) to be controlled by passing through the remote unit (3) which constitutes an interface between the main unit (2) and the group (10).

7. Workshop equipment according to one of the preceding claims, **characterized in that** the connection cable of at least one of said plurality of connections (24) between said remote unit (3) and said electrohydraulic unit (21) is provided with an interface of signal conversion usable in those cases in which a sensor mounted on the group (10) does not generate a signal that can be directly read by the main unit (2).

8. Workshop equipment according to one of the preceding claims, **characterized in that** said remote unit (3) is equipped with a battery power source.

9. Workshop equipment according to one of the preceding claims, **characterized in that** it comprises a plurality of remote units (3.1, 3.2, 3.3, 3N) each of them provided with a plurality of connections (24) for a different electrohydraulic unit (21) of a corresponding robotic gearbox (10.1, 10.2, 10.3, 10.N), connections (24) which are shaped and sized according to the devices to be monitored and the relative units of measurement to be detected.

10. Workshop equipment according to one of the preceding claims, **characterized in that** the connection (23) between said central unit (2) and said at least one remote unit (3) comprises a pair of connectors (230, 231) which can be coupled together according to a unique positioning in order to allow the connection according to a single pre-established way.
